# EUROPÄISCHE PATENTSCHRIFT

(11) **EP 3 084 273 B1**
(45) Veröffentlichungstag und Bekanntmachung des Hinweises auf die Patenterteilung: **01.08.2018**
(21) Anmeldenummer: 14827170.3
(22) Anmeldetag: 16.12.2014
(51) Int. Cl.: F16H 61/28, F16H 61/00

(54) **FLUIDANORDNUNG**
FLUID ARRANGEMENT
SYSTÈME FLUIDIQUE

(30) Priorität: 17.12.2013 DE 102013226309
(43) Veröffentlichungstag der Anmeldung: 26.10.2016
(73) Patentinhaber: Schaeffler Technologies AG & Co. KG, 91074 Herzogenaurach (DE)
(72) Erfinder: HERKOMMER, Dominik, 69198 Schriesheim (DE); BAEHR, Markus, 77815 Bühl (DE)
(86) Internationale Anmeldenummer: PCT/DE2014/200719
(87) Internationale Veröffentlichungsnummer: WO 2015/090317

(56) Entgegenhaltungen:
- EP-A1- 2 664 826
- WO-A1-2006/002450
- US-A1- 2011 198 180

## Beschreibung

Die Erfindung betrifft eine Fluidanordung und ein Verfahren zum fluidischen Betätigen mindestens einer Kupplung und mindestens einer Getriebekomponente, mit einer fluidischen Energiequelle.

Aus der deutschen Offenlegungsschrift DE 10 2008 009 653 A1 ist eine Hydraulikanordnung zur Steuerung eines Doppelkupplungsgetriebes eines Kraftfahrzeugs bekannt, die umfasst: Eine hydraulische Energiequelle zur Versorgung der Hydraulikanordnung mittels eines Hydraulikmediums mit hydraulischer Energie; einen Druckspeicher zur Speicherung der hydraulischen Energie; eine Kupplungskühlung zur Kühlung von Kupplungen des Doppelkupplungsgetriebes mittels des Hydraulikmediums; Kupplungsaktoren zum Betätigen einer ersten Kupplung und einer zweiten Kupplung, wobei die hydraulische Energiequelle eine zweiflutige Elektropumpe umfasst. Aus der deutschen Offenlegungsschrift DE 10 2010 047 801 A1 ist ein Hydrostataktor mit einem Geberzylinder enthaltend ein Gehäuse und einen in dem Gehäuse axial verlagerbaren, eine mit Druckmittel befüllte Druckkammer mit Druck beaufschlagenden Kolben, mit einem einen Drehantrieb in eine Axialbewegung wandelnden Planetenwälzgetriebe mit einer Hülse bekannt, wobei das Planetenwälzgetriebe durch einen Elektromotor angetrieben ist.

Die gattungsgemäße europäische Veröffentlichung EP 2 664 826 offenbart eine fluidische Aktuatoranordnung für einen Antriebsstrang, der wenigstens eine Reibkupplung zur Übertragung von Antriebsmoment und ein Getriebe aufweist, wobei die Reibkupplung mittels eines Hydraulikzylinders betätigbar ist. Der Hydraulikzylinder ist zur Betätigung der Reibkupplung direkt mit einem Pumpenanschluss einer elektromotorisch angetriebenen Pumpe so verbunden ist, dass sie durch Verändern der Drehzahl der Pumpe betätigt werden kann. Weiterhin ist eine Parksperren-Aktuatoreinrichtung vorgesehen. Dabei weist die Aktuatoreinrichtung für die Parksperre einen Parksperren-Hydraulikzylinder auf, der mit der Pumpe so verbindbar ist, derart, dass die Parksperre durch Verändern der Drehzahl der Pumpe betätigbar ist.

Aufgabe der Erfindung ist es, das Betätigen mindestens einer Kupplung und mindestens einer Getriebekomponente mit einer fluidischen Energiequelle zu vereinfachen.

Die Aufgabe ist bei einer Fluidanordung zum fluidischen Betätigen mindestens einer Kupplung und mindestens einer Getriebekomponente, mit einer fluidischen Energiequelle, wobei die fluidische Energiequelle eine Fluidpumpe mit einer ersten Förderrichtung, in welcher die Fluidpumpe auf einer Getriebeseite zur Betätigung der Getriebekomponente dient, und mit einer der ersten Fördereinrichtung entgegengesetzten zweiten Förderrichtung umfasst, in welcher die Fluidpumpe auf einer Kupplungsseite zur Betätigung der Kupplung dient, dadurch gelöst, dass ein Fluidreservoir über ein Zweidruckventil an die Getriebeseite und an die Kupplungsseite angeschlossen ist. Durch das Zweidruckventil wird auf einfache Art und Weise sichergestellt, dass nur auf einer Seite Druck anliegen kann. Nach Abbau dieses Drucks wird auf die andere Seite umgeschaltet. Das Zweidruckventil hat vorteilhaft zwei Schaltstellungen. In einer ersten Schaltstellung ist das Fluidreservoir mit der Getriebeseite verbunden. In der zweiten Schaltstellung ist das Fluidreservoir mit der Kupplungsseite verbunden. Bei der Fluidanordnung handelt es sich vorzugsweise um eine Hydraulikanordnung, die mit einem Hydraulikmedium, wie Hydrauliköl, betrieben wird. Bei der Fluidpumpe handelt es sich vorzugsweise um eine Hydraulikpumpe, insbesondere in Verdrängerbauweise, zum Beispiel eine Flügelzellenpumpe, eine Zahnradpumpe oder eine Kolbenpumpe. Zum Antrieb der Fluidpumpe dient zum Beispiel ein Elektromotor. Die zum Betätigen der Getriebekomponente und zum Betätigen der Kupplung verwendete Fluidpumpe wird auch als Pumpenaktor bezeichnet. Bei der Getriebekomponente handelt es sich zum Beispiel um einen Gangsteller, der zur Ausführung einer Wähl- und/oder Schaltbewegung dient. Bei der Kupplung handelt es sich um eine einzelne Kupplung oder um eine Teilkupplung einer Doppelkupplung. Die Kupplung kann direkt oder indirekt betätigt sein. Die Kupplung kann des Weiteren nass- oder trockenlaufend ausgeführt sein. In der ersten Förderrichtung wird die Kupplungsseite durch die Fluidpumpe mit Druck beaufschlagt. In der zweiten Förderrichtung wird die Getriebeseite durch die Fluidpumpe mit Druck beaufschlagt. Daher können die Förderrichtungen auch als Druckrichtungen bezeichnet werden.

Bei der Fluidanordnung kann auf der Getriebeseite und auf der Kupplungsseite jeweils mindestens ein Totvolumen vorgesehen sein. Das Totvolumen wirkt wie ein Hydraulikzylinder mit einem Hydraulikkolben, der in beiden Bewegungsrichtungen einen Endanschlag hat und mit keinem weiteren Bauteil verbunden ist. Auf der einen Seite des Kolbens ist Hydraulikmedium angeordnet, das über die Fluidpumpe mit Druck beaufschlagt werden kann. Auf der anderen Seite des Kolbens ist ein Umgebungsmedium angeordnet. Das Umgebungsmedium ist nicht druckdicht abgeschlossen, kann aber zum Beispiel durch einen Faltenbalg abgedichtet sein. Das Totvolumen dient vorteilhaft dazu, sicherzustellen, dass die Kupplung oder die Getriebekomponente nur dann betätigt wird, wenn dies auch erwünscht ist. Durch die Totvolumina wird erreichet, dass die Getriebekomponente nicht betätigt werden kann, solang die Kupplung noch betätigt ist, auch wenn sich die Kupplung gerade bewegt, zum Beispiel aus einer Schließstellung in eine Öffnungsstellung. Erst, wenn die Betätigung der Kupplung abgeschlossen ist, das heißt, zum Beispiel wenn die Kupplung offen ist, wird mit einer Betätigung der Getriebekomponente begonnen. Ebenso wird die Kupplung erst dann betätigt, zum Beispiel zugedrückt, wenn die Betätigung der Getriebekomponente abgeschlossen ist, zum Beispiel ein Gang eingelegt ist.

Die Fluidanordnung kann so ausgeführt sein, dass Vorspannkräfte auf die Getriebekomponente und die Kupplung größer als Druckkräfte sind, die zum Füllen der Totvolumina überwunden werden müssen. Die Totvolumina dienen zum Beispiel dazu, dass im Reversierbetrieb bei betätigter Kupplung das gesamte Hydraulikmedium aus einem kupplungsseitigen Nehmerzylinder hausgepumpt werden kann, bevor auf der Getriebeseite eine Betätigung der Getriebekomponente beginnt. Ebenso kann durch die Totvolumina aus der Getriebeseite Hydraulikmedium herausgepumpt werden, ohne dass die Kupplung dabei betätigt wird. Das Totvolumen löst diese Aufgabe, indem zum Beispiel beim Öffnen einer zugedrückten Kupplung auf der Getriebeseite das Totvolumen gefüllt wird, solange die Kupplung Druck abbaut, bevor ein Getriebeaktor mit Fluid versorgt wird.

Weiterhin kann bei der Fluidanordnung mindestens ein Fluidreservoir über eine erste Ventileinrichtung an die Getriebeseite und über eine zweite Ventileinrichtung an die Kupplungsseite angeschlossen sein. Die Ventileinrichtungen sind dann vorzugsweise als 2/2-Wegeventile ausgeführt.

Bei der Fluidanordnung können die Ventileinrichtungen als Rückschlagventile ausgeführt sind, die zum Fluidreservoir hin schließen. Dadurch wird auf einfache Art und Weise sichergestellt, dass kein Fluid von der mit durch die Fluidpumpe mit Druck beaufschlagten Seite in das Fluidreservoir gelangt. Dadurch kann ein unerwünschter Druckabbau auf der mit Druck beaufschlagten Seite verhindert werden.

Die Ventileinrichtungen einer Fluidanordnung können als 2/2-Wegeventile mit einer Öffnungsstellung und einer Schließstellung ausgeführt sein. Die 2/2-Wegeventile sind zum Beispiel elektromagnetisch angesteuert. Diese Ausführung der Ventileinrichtung liefert den Vorteil, dass die vorab beschriebenen Totvolumina entfallen können. Die Öffnungsstellung entspricht vorteilhaft einer Neutralstellung der jeweiligen Ventileinrichtung. Die Ventileinrichtungen können zu diesem Zweck zum Beispiel in ihre Öffnungsstellungen vorgespannt sein.

Die Ventileinrichtungen der Fluidanordnung können als 2/2-Wegeventile mit einer Öffnungsstellung und einer Rückschlagventilstellung ausgeführt sein. In der Rückschlagventilstellung verhindern die 2/2-Wegeventile einen unerwünschten Druckabbau in das jeweils angeschlossene Fluidreservoir. Die 2/2-Wegeventile sind vorteilhaft in ihre Rückschlagventilstellung vorgespannt, die der Neutralstellung entspricht. Die 2/2-Wegeventile mit der Öffnungsstellung und der Rückschlagventilstellung sind vorzugsweise hydraulisch angesteuert, und zwar besonders vorteilhaft mit dem Druck als Steuerdruck, der auf der jeweils anderen Seite herrscht. Das liefert den Vorteil, dass die vorab beschriebenen Totvolumina entfallen können.

Ein bevorzugtes Ausführungsbeispiel der Fluidanordnung ist dadurch gekennzeichnet, dass mindestens ein Fluidreservoir über einen ersten hydraulischen Widerstand an die Getriebeseite und/oder über einen zweiten hydraulischen Widerstand an die Kupplungsseite angeschlossen ist. Die vorzugsweise als Blenden ausgeführten hydraulischen Widerstände dienen dazu, zu verhindern, dass sich überschüssiges Fluid in der Fluidanordnung sammelt und das System blockiert. Besonders vorteilhaft kann es sein, nur auf der Getriebeseite eine Blende zu haben, da hier kein Druck gehalten werden muss.

Ein weiteres bevorzugtes Ausführungsbeispiel der Fluidanordnung ist dadurch gekennzeichnet, dass auf der Kupplungsseite ein hydraulischer Kupplungsaktor und auf der Getriebeseite ein hydraulischer oder teilhydraulischer Getriebeaktor angeordnet sind. Bei dem hydraulischen Kupplungsaktor handelt es sich zum Beispiel um einen hydraulischen Nehmerzylinder, über den die Kupplung zu- oder aufgedrückt wird. Der Nehmerzylinder kann außerhalb oder innerhalb der Kupplung angeordnet sein. Die Getriebebetätigung kann auf verschiedenste Weise erfolgen. Gemäß einem Ausführungsbeispiel erfolgt die Getriebebetätigung über zwei Nehmerzylinder, die über Ventile angesteuert werden. Die Ventile sind vorteilhaft mechanisch mit Getriebeaktoren, insbesondere mit Gangstellern verbunden.

Bei einem Verfahren zum fluidischen Betätigen mindestens einer Kupplung und mindestens einer Getriebekomponente, mit einer fluidischen Energiequelle, insbesondere mit einer vorab beschriebenen Fluidanordnung, , bei der eine beziehungsweise die Fluidpumpe in einer ersten Förderrichtung auf einer Getriebeseite zur Betätigung der Getriebekomponente und in einer der ersten Förderrichtung entgegengesetzten zweiten Förderrichtung auf einer Kupplungsseite zur Betätigung der Kupplung verwendet wird, ist die oben angegebene Aufgabe alternativ oder zusätzlich dadurch gelöst, dass ein Fluidreservoir über ein Zweidruckventil an die Getriebeseite und an die Kupplungsseite angeschlossen ist..

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine stark vereinfachte Darstellung einer erfindungsgemäßen Fluidanordnung mit einer Doppelkupplung, zwei Teilgetrieben und zwei Fluidpumpen;
Figur 2 einen Fluidschaltplan einer Fluidanordnung mit einer Kupplung, einem Teilgetriebe und einer Fluidpumpe mit Totvolumina;
Figur 3 eine ähnliche Fluidanordnung wie in Figur 2 mit zwei zusätzlichen hydraulischen Widerständen;
Figur 4 eine ähnliche Fluidanordnung wie in den Figuren 2 und 3 mit zwei Ablassventilen;
Figur 5 eine ähnliche Fluidanordnung wie in den Figuren 2 bis 4 mit zwei Ventileinrichtungen, die eine Rückschlagventilfunktion aufweisen und
Figur 6 ein Ausführungsbeispiel mit einem Zweidruckventil.

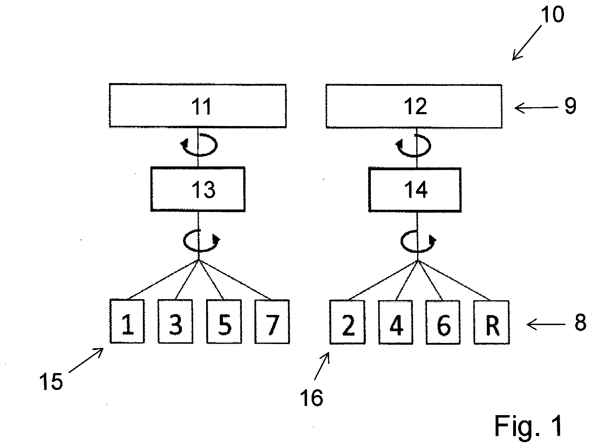

In Figur 1 ist eine erfindungsgemäße Fluidanordnung 10 stark vereinfacht dargestellt. Durch Rechtecke 1 bis 7 und R sind Gänge eines Getriebes 8 angedeutet. Die Gänge 1, 3, 5 und 7 sind einem ersten Teilgetriebe 15 zugeordnet. Die Gänge 2, 4, 6 und R sind einem zweiten Teilgetriebe 16 zugeordnet.

Die Fluidanordnung 10 umfasst des Weiteren eine Doppelkupplung 9 mit einer ersten Teilkupplung 11 und einer zweiten Teilkupplung 12. Die erste Teilkupplung 11 und das erste Teilgetriebe 15 sind durch eine einzige Fluidpumpe 13 betätigbar. Die zweite Teilkupplung 12 und das zweite Teilgetriebe 16 sind über eine einzige Fluidpumpe 14 betätigbar.

Die Fluidpumpen 13 und 14 fördern, wie durch Pfeile angedeutet ist, zum Betätigen der Teilkupplungen 11, 12 in einer ersten Förderrichtung. Zum Betätigen der Teilgetriebe 15, 16 fördern die Fluidpumpen 13, 14 in einer zweiten Förderrichtung, die, wie durch Pfeile angedeutet ist, der ersten Förderrichtung entgegengesetzt ist.

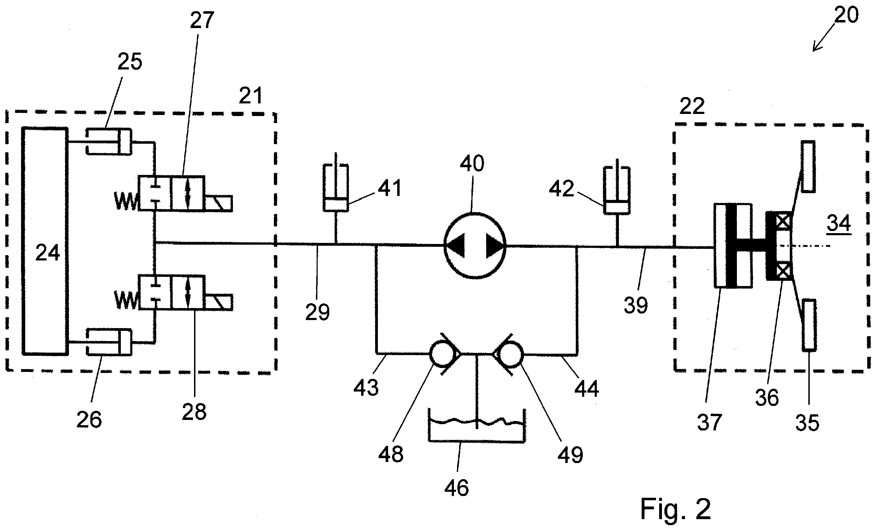

In den Figuren 2 bis 6 sind fünf Beispiele 20; 50; 60; 70; 80 einer Fluidanordnung in Form von Fluidschaltplänen dargestellt. Die Fluidanordnung 20; 50; 60; 70; 80 ist in einem (nicht dargestellten) Antriebsstrang eines Kraftfahrzeugs angeordnet. In dem Antriebsstrang dient die Fluidanordnung zum Betätigen einer nur durch ein gestricheltes Rechteck angedeuteten Getriebekomponente 21 und einer ebenfalls nur durch ein gestricheltes Rechteck angedeuteten Kupplung 22.

Die Getriebekomponente 21 umfasst auf einer Getriebeseite ein Getriebe oder Teilgetriebe 24. Dem Getriebe 24 sind zwei Getriebeaktoren 25, 26 zugeordnet. Die Getriebeaktoren 25, 26 sind als hydraulische Nehmerzylinder ausgeführt, die über Ventile 27, 28 angesteuert werden. Die Ventile 27, 28 sind zum Beispiel mechanisch mit Gangstellern verbunden.

In der Praxis werden mehr Gangsteller beziehungsweise Getriebeaktoren benötigt als beispielhaft dargestellt sind. Je nach Ausführung der Getriebekomponente 21 wird zur Getriebebetätigung auch nur ein Drucksignal benötigt, das auf der Getriebeseite bereitgestellt wird. Die Getriebebetätigung kann auch durch eine Aktorik erfolgen, die neben elektrischen Eingängen noch einen Hydraulikeingang hat, der durch die erfindungsgemäße Fluidanordnung mit einem Volumenstrom beaufschlagt wird.

Die Kupplung 22 umfasst zum Beispiel eine Teilkupplung 34 einer Doppelkupplung. Die Teilkupplung 34 ist zum Beispiel als trockenlaufende Reibungskupplung mit einer Anpressplatte 35 ausgeführt. Die Anpressplatte 35 wird über ein Betätigungslager 36 durch einen hydraulischen Kupplungsaktor 37 mit einer Betätigungskraft beaufschlagt. Der hydraulische Kupplungsaktor 37 ist im dargestellten Ausführungsbeispiel als Nehmerzylinder ausgeführt.

Die Betätigung der Getriebekomponente 21 und der Kupplung 22 erfolgt gemäß einem wesentlichen Aspekt der Erfindung durch eine Fluidpumpe 40 mit einer ersten Förderrichtung oder Druckrichtung, in welcher die Fluidpumpe 40 auf der Getriebeseite zur Betätigung der Getriebekomponente 21 dient.

Die Fluidpumpe 40 dient in einer der ersten Förderrichtung entgegengesetzten zweiten Förderrichtung auf der Kupplungsseite zur Betätigung der Kupplung 22. Zu diesem Zweck ist die Fluidpumpe 40 als Reversierpumpe ausgeführt, an welche auf der Getriebeseite eine Hydraulikleitung 29 und auf der Kupplungsseite eine Hydraulikleitung 39 angeschlossen sind.

Bei der in Figur 2 dargestellten Fluidanordnung 20 ist auf der Getriebeseite ein erstes Totvolumen 41 an die Hydraulikleitung 29 angeschlossen. Auf der Kupplungsseite ist ein zweites Totvolumen 42 an die Hydraulikleitung 39 angeschlossen. Das Totvolumen 41, 42 wirkt wie ein Hydraulikzylinder mit einem Kolben, der in beide Richtungen einen Endanschlag hat. Der Kolben ist mit keinem weiteren Bauteil verbunden. Auf der einen Seite ist der Kolben über die Hydraulikleitung 29, 39 mit Hydraulikmedium beaufschlagt. Auf der anderen Seite ist der Kolben mit einem Umgebungsmedium beaufschlagt. Das Umgebungsmedium ist nicht druckdicht abgeschlossen, kann aber zum Beispiel durch einen Faltenbalg abgedichtet sein.

Das Totvolumen 41, 42 dient dazu, sicherzustellen, dass die Kupplung 22 oder die Getriebekomponente 21 nur dann betätigt werden, wenn dies auch erwünscht ist. Es darf keine Aktuierung oder Betätigung der Getriebekomponente 21 stattfinden, solange die Kupplung 22 noch gedrückt ist, auch wenn diese sich gerade in Richtung Öffnen bewegt. Erst, wenn die Kupplung 22 offen ist, darf mit der Getriebeaktuierung begonnen werden. Ebenso darf erst dann die Kupplung 22 zugedrückt werden, wenn ein Gang sicher eingelegt ist.

Es soll also im Reversierbetrieb bei betätigter Kupplung 22 das gesamte Volumen aus dem kupplungsseitigen Nehmerzylinder 37 herausgepumpt werden können, bevor auf der Getriebeseite eine Aktuierung oder Betätigung beginnt. Ebenso soll aus der Getriebeseite Volumen herausgepumpt werden können, ohne die Kupplung 22 zu schließen.

Das Totvolumen 41, 42 löst diese Aufgabe, indem zum Beispiel beim Öffnen der zugedrückten Kupplung 22 auf der Getriebeseite das Totvolumen 41 gefüllt wird, solange die Kupplung 22 Druck abbaut, bevor der Getriebeaktor 25, 26 mit Fluid versorgt wird. Dazu ist entscheidend, dass die Vorspannung von Kupplung 22 und Getriebekomponente 21 größer sind, als der Druck, der nötig ist, um das jeweilige Totvolumen 42, 41 zu füllen.

Ein Fluidreservoir 46 ist über eine Anschlussleitung 43 auf der Getriebeseite an die Hydraulikleitung 29 angeschlossen. In der Anschlussleitung 43 ist eine erste Ventileinrichtung 48 angeordnet. Das Fluidreservoir 46 ist über eine zweite Anschlussleitung 44 auf der Kupplungsseite an die Hydraulikleitung 39 angeschlossen. In der zweiten Anschlussleitung 44 ist eine zweite Ventileinrichtung 49 angeordnet. Die beiden Ventileinrichtungen 48 und 49 sind als Rückschlagventile ausgeführt, die zum Fluidreservoir 46 hin sperren.

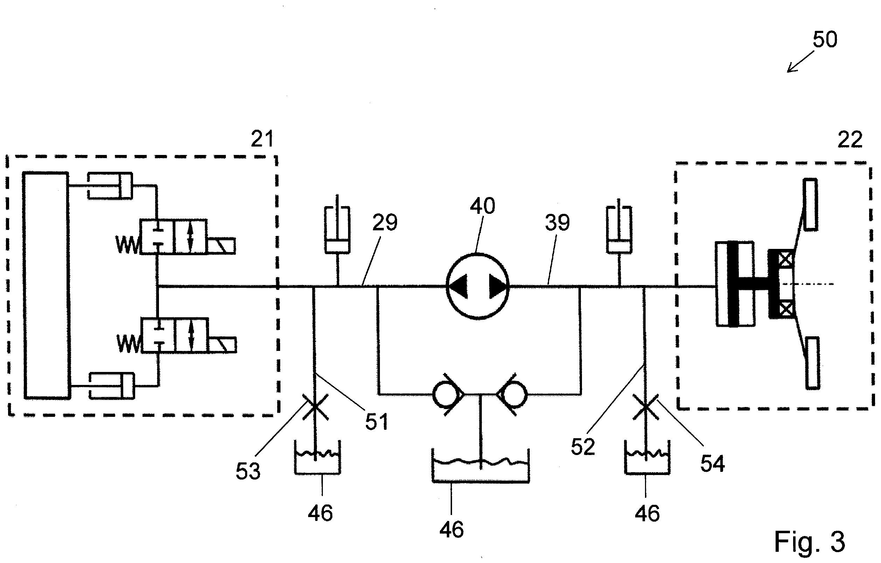

Die in Figur 3 dargestellte Fluidanordnung 50 umfasst gegenüber der in Figur 2 dargestellten Fluidanordnung 20 zwei zusätzliche hydraulische Widerstände 53, 54. Der hydraulische Widerstand 53 ist in einer Anschlussleitung 51 angeordnet, die auf der Getriebeseite die Hydraulikleitung 29 mit einem beziehungsweise dem Fluidreservoir 46 verbindet. Der hydraulische Widerstand 54 ist in einer Anschlussleitung 52 angeordnet, die auf der Kupplungsseite die Hydraulikleitung 39 mit einem beziehungsweise dem Fluidreservoir 46 verbindet. Die beiden hydraulischen Widerstände 53, 54 sind zum Beispiel als Blenden ausgeführt. Die Blenden 53, 54 dienen dazu, zu verhindern, dass sich überschüssiges Fluid in der Fluidanordnung 50 sammelt und das System blockiert.

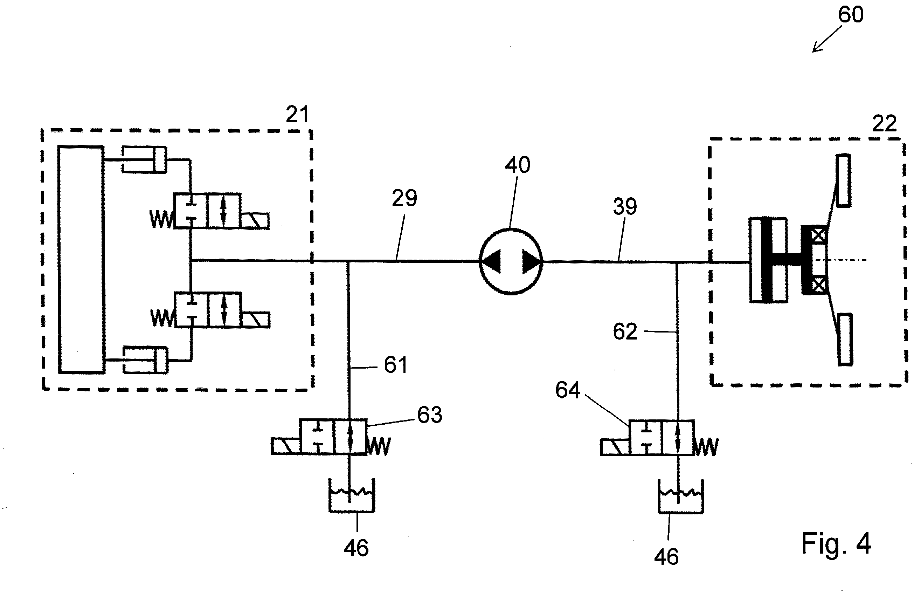

Bei der in Figur 4 dargestellten Fluidanordnung 60 sind gegenüber der in Figur 3 dargestellten Fluidanordnung 50 die hydraulischen Widerstände (53 und 54 in Figur 3) durch Ventileinrichtungen 63 und 64 ersetzt. Die Ventileinrichtung 63 ist einer Anschlussleitung 61 zugeordnet, die auf der Getriebeseite die Hydraulikleitung 29 mit einem beziehungsweise dem Fluidreservoir 46 verbindet. Die Ventileinrichtung 64 ist einer Anschlussleitung 62 zugeordnet, die auf der Kupplungsseite die Hydraulikleitung 39 mit einem beziehungsweise dem Fluidreservoir 46 verbindet.

Die beiden Ventileinrichtungen 63 und 64 sind als elektromagnetisch betätigte 2/2-Wegeventile mit einer Öffnungsstellung und einer Schließstellung ausgeführt. Die beiden Ventileinrichtungen 63 und 64 sind in ihre dargestellte Öffnungsstellung vorgespannt. Die aktive Ansteuerung der Ventileinrichtungen 63 und 64 ermöglicht, dass die Totvolumina (41 und 42 in Figur 2) und die Rückschlagventile (48, 49 in Figur 2) entfallen können.

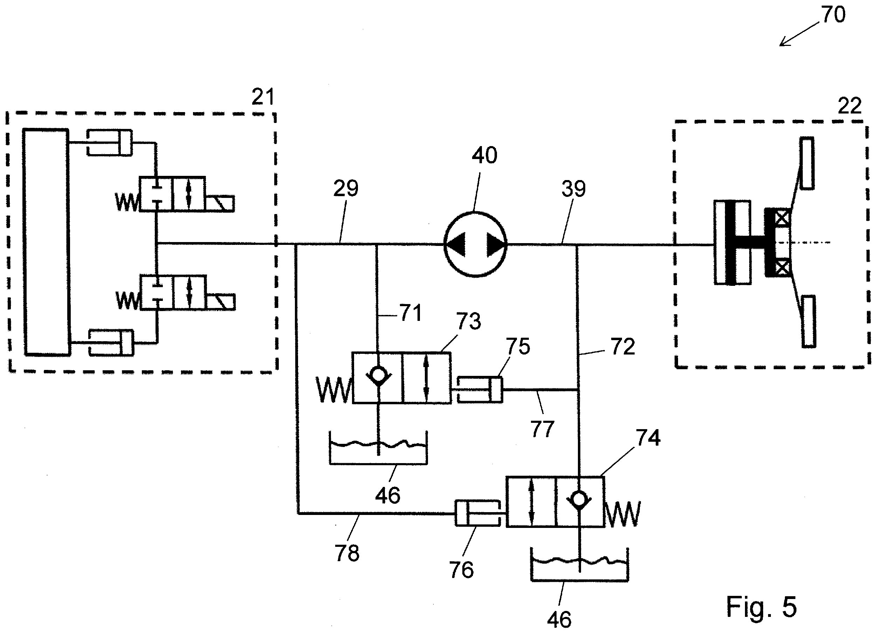

Die in Figur 5 dargestellte Fluidanordnung 70 umfasst eine erste Anschlussleitung 71, die auf der Getriebeseite die Hydraulikleitung 29 mit einem beziehungsweise dem Fluidreservoir 46 verbindet. Eine Anschlussleitung 72 verbindet ein beziehungsweise das Fluidreservoir 46 auf der Kupplungsseite mit der Hydraulikleitung 39. Der Anschlussleitung 71 auf der Getriebeseite ist eine Ventileinrichtung 73 zugeordnet. Der Anschlussleitung 72 auf der Kupplungsseite ist eine Ventileinrichtung 74 zugeordnet. Die Ventileinrichtungen 73 und 74 funktionieren in ihrem dargestellten Neutralzustand als Rückschlagventile. Im Neutralzustand funktionieren die Ventileinrichtungen 73 und 74 genauso wie die Rückschlagventile 48 und 49 in Figur 2.

Der Ventileinrichtung 73 auf der Getriebeseite ist ein Steuerzylinder 75 zugeordnet, der über eine Steuerleitung 77 steuerungsmäßig mit der Anschlussleitung 72 auf der Kupplungsseite verbunden ist. Analog ist der Ventileinrichtung 74 ein Steuerzylinder 76 zugeordnet, der über eine Steuerleitung 78 steuerungsmäßig mit der Hydraulikleitung 29 auf der Getriebeseite verbunden ist.

Wird nun auf der Getriebeseite Druck aufgebaut, so wird die Ventileinrichtung 74 durch den Steuerzylinder 76 geöffnet und offen gehalten, solange auf der Getriebeseite Druck ist. So wird verhindert, dass bei einer Richtungsumkehr der Fluidpumpe 40 die Kupplung 22 geschlossen wird, bevor das Getriebe 21 druckfrei ist. Wenn im anderen Fall auf der Kupplungsseite Druck aufgebaut wird, so wird die Ventileinrichtung 73 durch den Steuerzylinder 75 geöffnet und offen gehalten, solange auf der Kupplungsseite Druck anliegt.

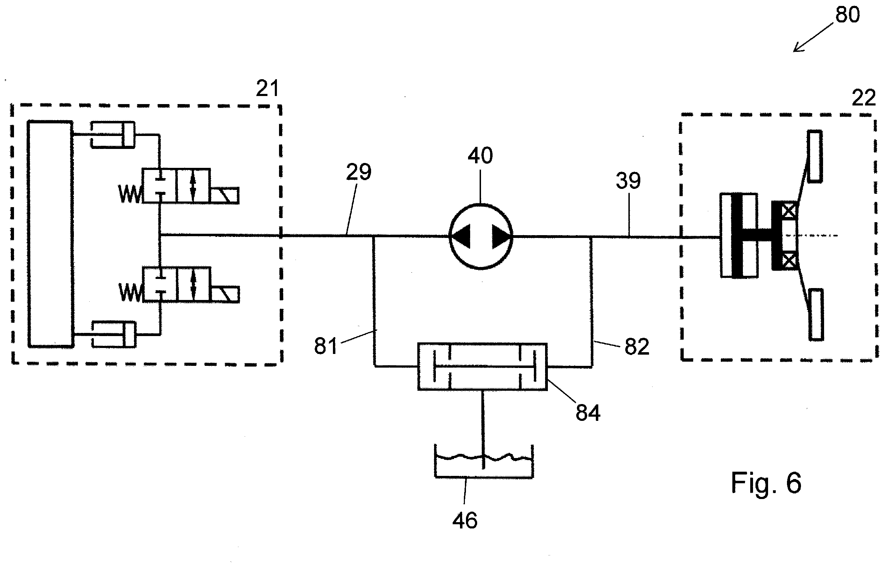

Bei der in Figur 6 dargestellten Fluidanordnung 80 ist ein Fluidreservoir 46 unter Zwischenschaltung eines Zweidruckventils 84 über eine erste Anschlussleitung 81 an die Hydraulikleitung 29 und über eine zweite Anschlussleitung 82 an die Hydraulikleitung 39 angeschlossen. Das Zweidruckventil 84 stellt auf einfache Art und Weise sicher, dass nur auf einer Seite Druck anliegen kann und nach Abbau dieses Drucks auf die andere Seite umgeschaltet wird. Die Fluidanordnung 80 ermöglicht im Wesentlichen die gleiche Funktion wie die Fluidanordnung 70 in Figur 5, ist aber konstruktiv einfacher.

### Bezugszeichenliste

- 1: erster Gang
- 2: zweiter Gang
- 3: dritter Gang
- 4: vierter Gang
- 5: fünfter Gang
- 6: sechster Gang
- 7: siebter Gang
- R: Rückwärtsgang
- 8: Getriebe
- 9: Doppelkupplung
- 10: Fluidanordnung
- 11: Teilkupplung
- 12: Teilkupplung
- 13: Fluidpumpe
- 14: Fluidpumpe
- 15: Teilgetriebe
- 16: Teilgetriebe

- 20: Fluidanordnung
- 21: Getriebekomponente
- 22: Kupplung

- 24: Getriebe
- 25: Getriebeaktor
- 26: Getriebeaktor
- 27: Ventil
- 28: Ventil
- 29: Hydraulikleitung

- 34: Teilkupplung
- 35: Anpressplatte
- 36: Betätigungslager
- 37: Kupplungsaktor
- 39: Hydraulikleitung
- 40: Fluidpumpe
- 41: Totvolumen
- 42: Totvolumen
- 43: Anschlussleitung
- 44: Anschlussleitung
- 46: Fluidreservoir
- 48: Ventileinrichtung
- 49: Ventileinrichtung
- 50: Fluidanordnung
- 51: Anschlussleitung
- 52: Anschlussleitung
- 53: hydraulischer Widerstand
- 54: hydraulischer Widerstand

- 60: Fluidanordnung
- 61: Anschlussleitung
- 62: Anschlussleitung
- 63: Ventileinrichtung
- 64: Ventileinrichtung

- 70: Fluidanordnung
- 71: Anschlussleitung
- 72: Anschlussleitung
- 73: Ventileinrichtung
- 74: Ventileinrichtung
- 75: Steuerzylinder
- 76: Steuerzylinder
- 77: Steuerleitung
- 78: Steuerleitung

- 80: Fluidanordnung
- 81: Anschlussleitung
- 82: Anschlussleitung

- 84: Zweidruckventil

## Patentansprüche

1. Fluidanordnung (10;20;50;60;70;80) zum fluidischen Betätigen mindestens einer Kupplung (34) und mindestens einer Getriebekomponente (21), mit einer fluidischen Energiequelle, wobei die fluidische Energiequelle eine Fluidpumpe (40) mit einer ersten Förderrichtung, in welcher die Fluidpumpe (40) auf einer Getriebeseite zur Betätigung der Getriebekomponente (21) dient, und mit einer der ersten Förderrichtung entgegengesetzten zweiten Förderrichtung umfasst, in welcher die Fluidpumpe (40) auf einer Kupplungsseite zur Betätigung der Kupplung (34) dient, **dadurch gekennzeichnet, dass** ein Fluidreservoir (46) über ein Zweidruckventil (84) an die Getriebeseite und an die Kupplungsseite angeschlossen ist.

2. Fluidanordnung nach Anspruch 1, **dadurch gekennzeichnet, dass** mindestens ein Fluidreservoir (46) über einen ersten hydraulischen Widerstand (53) an die Getriebeseite und/oder über einen zweiten hydraulischen Widerstand (54) an die Kupplungsseite angeschlossen ist.

3. Verfahren zum fluidischen Betätigen mindestens einer Kupplung (22) und mindestens einer Getriebekomponente (21), mit einer fluidischen Energiequelle, insbesondere mit einer Fluidanordnung nach einem der vorhergehenden Ansprüche, wobei eine Fluidpumpe (40) in einer ersten Förderrichtung auf einer Getriebeseite zur Betätigungder Getriebekomponente (21) und in einer der ersten Förderrichtung entgegengesetzten zweiten Förderrichtung auf einer Kupplungsseite zur Betätigung der Kupplung (22) vorgesehen ist, **dadurch gekennzeichnet, dass** ein Zweidruckventil (84) zum Anschließen eines Fluidreservoirs (46) an die Getriebeseite und an die Kupplungsseite verwendet wird.

## Claims

1. Fluid arrangement (10; 20; 50; 60; 70; 80) for the fluidic actuation of at least one clutch (34) and of at least one transmission component (21), having a fluidic energy source, wherein the fluidic energy source comprises a fluid pump (40) with a first conveying direction, in which the fluid pump (40) serves for actuating, on a transmission side, the transmission component (21), and with a second conveying direction, which is opposite to the first conveying direction and in which the fluid pump (40) serves for actuating, on a clutch side, the clutch (34), **characterized in that** a fluid reservoir (46) is connected via a two-pressure valve (84) to the transmission side and to the clutch side.

2. Fluid arrangement according to Claim 1, **characterized in that** at least one fluid reservoir (46) is connected via a first hydraulic resistance (53) to the transmission side and/or via a second hydraulic resistance (54) to the clutch side.

3. Method for fluidically actuating at least one clutch (22) and at least one transmission component (21), having a fluidic energy source, in particular having a fluid arrangement according to one of the preceding claims, wherein a fluid pump (40), in a first conveying direction, is provided for actuating, on a transmission side, the transmission component (21) and, in a second conveying direction opposite to the first conveying direction, is provided for actuating, on a clutch side, the clutch (22), **characterized in that** a two-pressure valve (84) is used for connecting a fluid reservoir (46) to the transmission side and to the clutch side.

## Revendications

1. Agencement fluidique (10 ; 20 ; 50 ; 60 ; 70 ; 80) pour l'actionnement fluidique d'au moins un embrayage (34) et d'au moins un composant de transmission (21), comprenant une source d'énergie fluidique, la source d'énergie fluidique comprenant une pompe de fluide (40) avec un premier sens de refoulement dans lequel la pompe fluidique (40), sur un côté de transmission, sert à l'actionnement du composant de transmission (21) et avec un deuxième sens de refoulement opposé au premier sens de refoulement, dans lequel la pompe de fluide (40), sur un côté d'embrayage, sert à actionner l'embrayage (34), **caractérisé en ce qu'**un réservoir de fluide (46) est raccordé par le biais d'une soupape à double pression (84) au côté de transmission et au côté d'embrayage.

2. Agencement fluidique selon la revendication 1, **caractérisé en ce qu'**au moins un réservoir de fluide (46) est raccordé par le biais d'une première résistance hydraulique (53) au côté de transmission et/ou par le biais d'une deuxième résistance hydraulique (54) au côté d'embrayage.

3. Procédé d'actionnement fluidique d'au moins un embrayage (22) et d'au moins un composant de transmission (21), comprenant une source d'énergie fluidique, en particulier avec un agencement de fluide selon l'une quelconque des revendications précédentes, une pompe de fluide (40) étant prévue, dans un premier sens de refoulement, sur un côté de transmission, pour l'actionnement du composant de transmission (21) et dans un deuxième sens de refoulement opposé au premier sens de refoulement, sur un côté d'embrayage, pour l'actionnement de l'embrayage (22), **caractérisé en ce qu'**une soupape à double pression (84) est utilisée pour le raccordement d'un réservoir de fluide (46) au côté de transmission et au côté d'embrayage.
